# EUROPÄISCHE PATENTSCHRIFT

(11) **EP 2 568 446 B1**
(45) Veröffentlichungstag und Bekanntmachung des Hinweises auf die Patenterteilung: **05.08.2015**
(21) Anmeldenummer: 12180248.2
(22) Anmeldetag: 13.08.2012
(51) Int. Cl.: G07F 19/00, G06F 17/00, G07F 9/06, G07D 11/00

(54) **Vorrichtung zur Handhabung von Wertscheinen und Verfahren zum Behandeln eines Einzahlungswertscheinstaus**
Device for handling vouchers, and a process for handling a payment voucher status
Dispositif de manipulation de documents de valeur et procédé de traitement d'un blocage de documents de valeur pour paiement

(30) Priorität: 09.09.2011 DE 102011053441
(43) Veröffentlichungstag der Anmeldung: 13.03.2013
(73) Patentinhaber: Wincor Nixdorf International GmbH, 33106 Paderborn (DE)
(72) Erfinder: Höschen, Hermann, 33102 Paderborn (DE)

(56) Entgegenhaltungen:
- EP-A1- 1 517 275
- DE-A1-102007 014 176
- US-A1- 2005 173 515
- US-B2- 7 604 425

## Beschreibung

Die Erfindung betrifft eine Vorrichtung zur Handhabung Wertscheinen, die eine Ein- und Ausgabeeinheit, eine Steuereinheit, mindestens eine Geldkassette zum Aufbewahren von Wertscheinen und eine Reject-Kassette zur Aufnahme von einzubehaltenden Wertscheinen umfasst. Ferner hat die Vorrichtung eine Transporteinheit zum Transport der Wertscheine zwischen der Eingabe- und Ausgabeeinheit, der Geldkassette und der Reject-Kassette. Mit Hilfe eines Bestandszählers wird jeweils der aktuelle Bestand der Geldkassette an Wertscheinen angegeben, wobei bei der Entnahme eines Wertscheins aus der Geldkassette die Steuereinheit den Wert des Bestandszählers um Wert 1 verringert und beim Zuführen eines Wertscheins um den Wert 1 erhöht. Beim Auftreten eines Fehlabzuges nach der Entnahme mindestens eines Wertscheins aus der Geldkassette steuert die Steuereinheit die Transporteinheit derart an, dass diese den Wertschein bzw. die Wertscheine des Fehlabzugs in die Reject-Kassette transportiert. Ferner ist ein geldkassettenspezifischer Reject-Zähler vorgesehen, der die Gesamtzahl der dieser Geldkassette entnommenen und der Reject-Kassette zugeführten Wertscheine angibt, wobei die Steuereinheit den Wert dieses Reject-Zählers um die Anzahl der aufgrund des Fehlabzuges in die Reject-Kassette transportierten Wertscheine erhöht. Ferner betrifft die Erfindung ein Verfahren zum Betreiben einer Vorrichtung zur Handhabung von Wertscheinen.

Bei bekannten Vorrichtungen zur Handhabung von Wertscheinen sind jeder Geldkassette der Vorrichtung ein Bestandszähler, der den aktuellen Wert der Geldkassette an Wertscheinen angibt, und ein Reject-Zähler, der die Anzahl der dieser Geldkassette entnommenen und aufgrund eines Fehlabzuges der Reject-Kassette zugeführten Wertscheinen angibt, vorgesehen. Die Reject-Kassette selbst weist dagegen keinen Bestandszähler auf, so dass bei bekannten Vorrichtungen aufgrund der gängigen verwendeten Softwarestandards der Bestand der Vorrichtung ermittelt wird, indem die Bestandszähler und die Reject-Zähler aller Geldkassetten aufsummiert werden. Über die Summe der Reject-Zähler ist der Bestand der Reject-Kassette bekannt.

Bei den bekannten Vorrichtungen und den bekannten Softwareapplikationen ist die Reject-Kassette lediglich dafür vorgesehen, Wertscheine, die aufgrund eines Fehlabzuges bei der Auszahlung nicht ausgezahlt werden können, aufzunehmen. Die Software dagegen ist nicht in der Lage das Auftreten eines Wertscheinstaus bei der Einzahlung von Wertscheinen diese Wertscheine auf die Reject-Kassette zu verbuchen. Dies führt zu dem Problem, dass beim Auftreten eines Wertscheinstaus bei der Einzahlung von Wertscheinen bei Geldautomaten, die keine Sammelgeldkassette, in der nicht wieder für die Auszahlung bestimmte Denominationen aufgenommen werden, die Wertscheine dieses Wertscheinstaus bei der Einzahlung nur auf aufwendige Weise datenverarbeitungsmäßig verarbeitet werden können.

Eine gängige Möglichkeit ist es, die Wertscheine des Wertscheinstaus in eine der Geldkassetten zu transportieren und diese Geldkassetten anschließend außer Betrieb zu nehmen, d.h. dass in diese Geldkassetten keine weiteren Wertscheine mehr ein- oder ausgezahlt werden können. Dies hat den Nachteil, dass die Anzahl der zur Verfügung stehenden Geldkassetten reduziert wird, und somit die Funktion der Vorrichtung nicht im vollen Umfang gegeben ist und eventuell Störungen auftreten.

Eine weitere Möglichkeit wäre es, dass die Wertscheine des Wertscheinstaus in die Reject-Kassette transportiert werden, aber keine datenverarbeitungsmäßige Verbuchung der Wertscheine erfolgt. Dies hat den Nachteil, dass mit Hilfe der gängigen Applikationen, die in der Steuereinheit gespeichert sind, es nicht möglich ist, den aktuellen Bestand der Vorrichtung an Wertscheinen zu ermitteln.

Die US 2005/0173515 A1 zeigt einen Geldausgabeautomaten mit Bargeldkassette und Reject-Container.

Es ist Aufgabe der Erfindung, eine Vorrichtung zur Handhabung von Wertscheinen und ein Verfahren zum Betreiben einer solchen Vorrichtung anzugeben, mit dessen Hilfe auf einfache Weise bei der Einzahlung auftretende Wertscheinstaus gehandhabt werden können.

Diese Aufgabe wird durch ein Verfahren mit den Merkmalen des Anspruchs 1 sowie durch eine Vorrichtung mit den Merkmalen des unabhängigen Vorrichtungsanspruchs 2 gelöst. Vorteilhafte Weiterbildungen der Erfindung sind in den abhängigen Ansprüchen angegeben. Erfindungsgemäß erhöht die Steuereinheit beim Auftreten eines Wertscheinstaus während des Transports von mindestens einem eingezahlten Wertschein von der Eingabe- und Ausgabeeinheit zu der Geldkassette den Wert des Bestandszählers dieser Geldkassette in einem ersten Schritt zunächst um die Anzahl der Wertscheine des Wertscheinstaus. In einem sich anschließenden zweiten Schritt reduziert die Steuereinheit den Wert des Bestandszählers dieser Geldkassette um die Anzahl der Wertscheine des Wertscheinstaus und erhöht umgekehrt den Wert des Reject-Zählers dieser Geldkassette um die Anzahl der Wertscheine des Wertscheinstaus.

Die Wertscheine des Wertscheinstaus dagegen werden physisch vorzugsweise direkt von dem Ort, an dem der Wertscheinstau aufgetreten ist, in die Reject-Kassette transportiert, ohne zuvor der Geldkassette zugeführt zu werden.

Dies hat den Vorteil, dass die Wertscheine des Wertscheinstaus direkt der Reject-Kassette zugeführt werden, so dass der Wertscheinstau auf einfache Weise beseitigt ist, datenverarbeitungsmäßig aber in dem ersten Schritt wie eine reguläre Einzahlung dieser Wertscheine in die Geldkassette und eine anschließende Auszahlung dieser Wertscheine mit einem Fehlabzug, der zum Transport der Wertscheine in die Reject-Kassette führen würde, gehandhabt werden. Somit kann der bei der Einzahlung auftretende Wertscheinstau über die bekannten Applikationen, gemäß derer ein Transport von Wertscheinen in die Reject-Kassette lediglich bei Auszahlungen vorgesehen ist, verbucht werden, so dass keine aufwendigen Änderungen der Applikationen, insbesondere keine Änderungen der Programmierschnittstellen, notwendig sind.

Unter einem Fehlabzug bei der Auszahlung von Wertscheinen werden insbesondere Doppelabzüge, Mehrfachabzüge und/oder Wertscheinstaus bei der Auszahlung der entnommenen Wertscheine verstanden. Die Wertscheine dieses Doppelabzugs, Mehrfachabzugs und/oder Wertscheinstaus werden dann über die Transporteinheit der Reject-Kassette zugeführt, so dass verhindert wird, dass eventuell ein falscher Geldbetrag ausbezahlt wird.

Der aktuelle Wert des Bestandszählers und/oder der aktuelle Wert des Reject-Zählers der Geldkassette können in einem Speicherelement der Geldkassette und/oder in einem Speicherelement der Steuereinheit gespeichert sein. Ersteres hat den Vorteil, dass die Information über den Bestand der Geldkassette an Wertscheinen in der Geldkassette verbleibt und somit beim Einsetzen der Geldkassette in andere Vorrichtungen zur Handhabung von Wertscheinen diese den Bestand der Geldkassette auslesen kann. Das Speichern der aktuellen Werte in dem Speicherelement der Steuereinheit dagegen hat den Vorteil, dass die Werte aller in der Vorrichtung aufgenommener Geldkassetten zentral gespeichert sind und einfach gehandhabt werden können.

Bei einer besonders bevorzugten Ausführungsform sind in der Vorrichtung mehrere Geldkassetten aufgenommen, wobei von jeder Geldkassette jeweils der aktuelle Wert eines Bestandszählers und der aktuelle Wert eines Reject-Zählers in einem Speicherelement gespeichert sind. Dies hat den Vorteil, dass jederzeit der aktuelle Bestand der Vorrichtung als Ganzes ermittelt werden kann.

Ferner ist es vorteilhaft, wenn die Steuereinheit nach der Eingabe eines Wertscheinbündels an Wertscheinen über die Eingabe- und Ausgabeeinheit jeden eingegebenen Wertschein einer Geldkassette eindeutig zuordnen, in der der Wertschein aufgenommen werden soll. Insbesondere ist ein Sensor zur Ermittlung der Denomination der eingegebenen Wertscheine vorgesehen, wobei die Steuereinheit in Abhängigkeit der ermittelten Denomination die Wertscheine den einzelnen Geldkassetten zuordnet. Die Steuereinheit steuert die Transporteinheit derart an, dass diese jeden Wertschein zu der dem Wertschein jeweils zugeordneten Geldkassette transportiert. Tritt während dieses Transports ein Wertscheinstau auf, so steuert die Steuereinheit die Transporteinheit derart an, dass sie die Wertscheine dieses Wertscheinstaus in die Reject-Kassette transportiert. Ferner addiert die Steuereinheit im ersten Schritt die an dem Wertscheinstau beteiligten Wertscheine jeweils zu dem Wert des Bestandszählers diejenige Geldkassette, der die jeweiligen Wertschein zugeordnet ist, hinzu. Im Zweiten Schritt verringert die Steuereinheit den Wert der Bestandszähler jeder Geldkassette um den Wert, um den er aufgrund des Wertscheinstaus erhöht wurde und erhöht den Wert des jeweiligen Reject-Zählers der jeweiligen Geldkassette um diesen Wert. Auf diese Weise wird erreicht, dass durch das Auftreten des Wertscheinstaus die Wertscheine datenverarbeitungsmäßig derart behandelt werden, als ob sie zunächst planmäßig auf die zugeordneten Geldkassetten eingezahlt wurden und anschließend wieder zur Auszahlung entnommen wurden, wobei bei dieser anschließenden Auszahlung ein Fehlabzug, der zum Zuführen der Wertscheine zu der Reject-Kassette führen würde, aufgetreten wäre.

Ferner ist es vorteilhaft, wenn die Wertscheine in den Geldkassetten sortenrein gespeichert werden, so dass auf einfache Weise jede gewünschte Stückelung an Wertscheinen ausgezahlt werden kann.

Zur Ermittlung des Bestands der Vorrichtung an Wertscheinen kann die Steuereinheit die Werte der Bestandszähler aller aufgenommenen Geldkassetten und die Werte der Reject-Zähler aller aufgenommenen Geldkassetten aufsummieren, so dass auf einfache Weise der aktuelle Bestand ermittelt werden kann. Hierzu ist es nicht notwendig, dass die Reject-Kassette einen eigenen Bestandszähler aufweist, da der Bestand der Reject-Kassette über die Reject-Zähler der Geldkassetten bekannt ist. Bei einer besonders bevorzugten Ausführungsform multipliziert die Steuereinheit jeweils den Wert des Bestandszählers und den Wert des Reject-Zählers mit der Denomination der Wertscheine, die in der jeweiligen Geldkassette aufgenommen sind, und addiert anschließend die sich ergebenden Werte.

In der Steuereinheit sind vorzugsweise Programmdaten mindestens einer Applikation, vorzugsweise mehrerer Applikationen gespeichert. Diese Applikationen sind insbesondere als eine Extension for Financial Services Applikation oder eine Java Extension for Financial Services Applikation ausgebildet. Extension for Financial Services und Java Extension for Financial Services sind die beiden gängigsten Programmierschnittstellen zur Steuerung von Peripheriegeräten von Selbstbedienungssystemen, also insbesondere von Geldautomaten, automatischen Kassensystemen und/oder automatischen Tresorkassen. Durch die erfindungsgemäße Handhabung der bei der Einzahlung auftretenden Wertscheinstaus wird somit erreicht, dass diese weitverbreiteten Programmierschnittstellen unverändert weiterverwendet werden können, obwohl diese das Auftreten von Wertscheinstaus bei der Einzahlung datenverarbeitungstechnisch eigentlich nicht verarbeiten können.

In der Steuereinheit ist insbesondere eine Einzahlungsapplikation, die die Steuereinheit bei der Einzahlung von Wertscheinen abarbeitet, eine Auszahlungsapplikation, die die Steuereinheit bei der Auszahlung von Wertscheinen abarbeitet und/oder eine Reject-Applikation, die die Steuereinheit beim Auftreten eines Fehlabzuges abarbeitet, hinterlegt. Durch die Abarbeitung der Einzahlungsapplikation wird bei der Einzahlung von Wertscheinen insbesondere der Bestandszähler derjenigen Geldkassette, der die eingezahlten Wertscheine zugeführt werden bzw. die Bestandszähler derjenigen Geldkassetten, zu denen die eingezahlten Wertscheine zugeführt werden, jeweils um die Anzahl der zugeführten Wertscheine erhöht. Durch die Abarbeitung der Auszahlungsapplikation dagegen wird bei der Entnahme von Wertscheinen aus einer Geldkassette der Wert des Bestandszählers dieser Geldkassette um die Anzahl der entnommenen Wertscheine reduziert. Entsprechend wird durch die Abarbeitung der Reject-Applikation beim Auftreten eines Fehlabzugs nach der Entnahme von Wertscheinen aus einer Geldkassette der Reject-Zähler dieser Geldkassette um die Anzahl der an dem Fehlabzug beteiligten, dieser Geldkassette zuvor entnommenen Wertscheine erhöht.

Es ist vorteilhaft, wenn die Steuereinheit beim Auftreten eines Wertscheinstaus bei der Einzahlung von Wertscheinen im ersten Schritt die Einzahlungsapplikation und im zweiten Schritt die Auszahlungsapplikation und die Reject-Applikation abarbeitet, so dass das entsprechende Erhöhen des Bestandszählers im ersten Schritt und das Reduzieren des Bestandszählers und das Erhöhen des Reject-Zählers im zweiten Schritt auf einfache Weise mit den ohnehin schon in der Steuereinheit gespeicherten Applikationen erfolgen kann.

Ferner ist es vorteilhaft, wenn die Steuereinheit beim Auftreten eines Wertscheinstaus bei der Einzahlung von Wertscheinen die Wertscheine zunächst derart verbucht, als ob kein Wertscheinstau aufgetreten wäre, d.h., als ob die Wertscheine den jeweils zugeordneten Geldkassetten zugeführt worden wären. Im zweiten Schritt verbucht die Steuereinheit anschließend eine virtuelle Auszahlung dieser Wertscheine des Wertscheinstaus, wobei die Steuereinheit wiederum bei dieser virtuellen Auszahlung die Wertscheine derart verbucht, als ob bei der virtuellen Auszahlung ein Wertscheinstau aufgetreten wäre. Somit wird insgesamt erreicht, dass die Wertscheine des bei der Einzahlung aufgetretenen Wertscheinstaus zwar physisch direkt der Reject-Kassette zugeführt werden, datenverarbeitungsmäßig aber zunächst wie eine reguläre Einzahlung und eine anschließende Auszahlung mit einem Fehlabzug verbucht werden.

Ein weiterer Aspekt der Erfindung betrifft ein Verfahren zum Betreiben einer Vorrichtung zur Handhabung von Wertscheinen, bei dem mit Hilfe einer Eingabe- und Ausgabeeinheit Wertscheine ein- und ausgegeben werden können. Ferner werden eine Geldkassette zur Aufbewahrung von Wertscheinen, eine Reject-Kassette zur Aufnahme von einzubehaltenden Wertscheinen und ein Bestandszähler, der den aktuellen Bestand der Geldkassette an Wertscheinen angibt, verwendet. Bei der Entnahme eines Wertscheins aus einer Geldkassette wird der Wert des Bestandszählers um den Wert 1 verringert und beim Zuführen um den Wert 1 erhöht. Beim Auftreten eines Fehlabzugs nach der Entnahme mindestens eines Wertscheins aus der Geldkassette werden der Wertschein bzw. die Wertscheine des Fehlabzugs in die Reject-Kassette transportiert. Ferner wird ein der Geldkassette eindeutig zugeordneter geldkassettenspezifischer Reject-Zähler verwendet, der die Gesamtzahl der dieser Geldkassette entnommenen und der Reject-Kassette zugeführten Wertscheine angibt. Der Wert dieses Reject-Zählers wird beim Auftreten eines Fehlabzugs nach der Entnahme des mindestens einen Wertscheins aus der Geldkassette um die Anzahl der aufgrund eines Fehlabzugs in die Reject-Kassette transportierten Wertscheine erhöht. Beim Auftreten eines Wertscheinstaus während des Transports von mindestens einem eingezahlten Wertschein von der Eingabe- und Ausgabeeinheit zu der Geldkassette wird der Wert des Bestandszählers der Geldkassette zunächst in einem ersten Schritt um die Anzahl der Wertscheine des Wertscheinstaus erhöht. Anschließend wird in einem zweiten Schritt der Wert des Bestandszählers wieder um die Anzahl der Wertscheine des Wertscheinstaus reduziert und der Wert des Reject-Zählers der Geldkassette um die Anzahl der Wertscheine des Wertscheinstaus erhöht.

Das zuvor beschriebene Verfahren kann mit den im Zusammenhang mit der Vorrichtung beschriebenen Merkmalen weitergebildet werden. Insbesondere kann das Verfahren mit den in den auf den unabhängigen Vorrichtungsanspruch rückbezogenen abhängigen Ansprüchen angegebenen Merkmalen bzw. entsprechenden Verfahrensmerkmalen weitergebildet werden.

Weitere Merkmale und Vorteile der Erfindung ergeben sich aus der folgenden Beschreibung, die die Erfindung anhand von Ausführungsbeispielen im Zusammenhang mit den beigefügten Figuren näher erläutert.

Es zeigen:
- Figur 1: eine schematische Darstellung einer Vorrichtung zur Handhabung von Wertscheinen;
- Figur 2: eine schematische Darstellung einer Bestandsüberwachung der Vorrichtung nach Figur 1 an Wertscheinen;
- Figur 3: ein Ablaufdiagramm eines Verfahrens zum Betreiben der Vorrichtung nach Figur 1;
- Figur 4: eine schematische Darstellung der Bestandsüberwachung der Vorrichtung nach Figur 1 vor dem Auftreten eines Wertscheinstaus bei einer Einzahlung;
- Figur 5: eine schematische Darstellung der Bestandsüberwachung der Vorrichtung nach Figur 1 nach dem Auftreten eines Wertscheinstaus bei der Einzahlung von Wertscheinen und nach der Abarbeitung eines ersten Schrittes des Verfahrens nach Figur 3; und
- Figur 6: eine schematische Darstellung der Bestandsüberwachung der Vorrichtung nach Figur 1 nach vollständiger Abarbeitung des Verfahrens nach Figur 3.

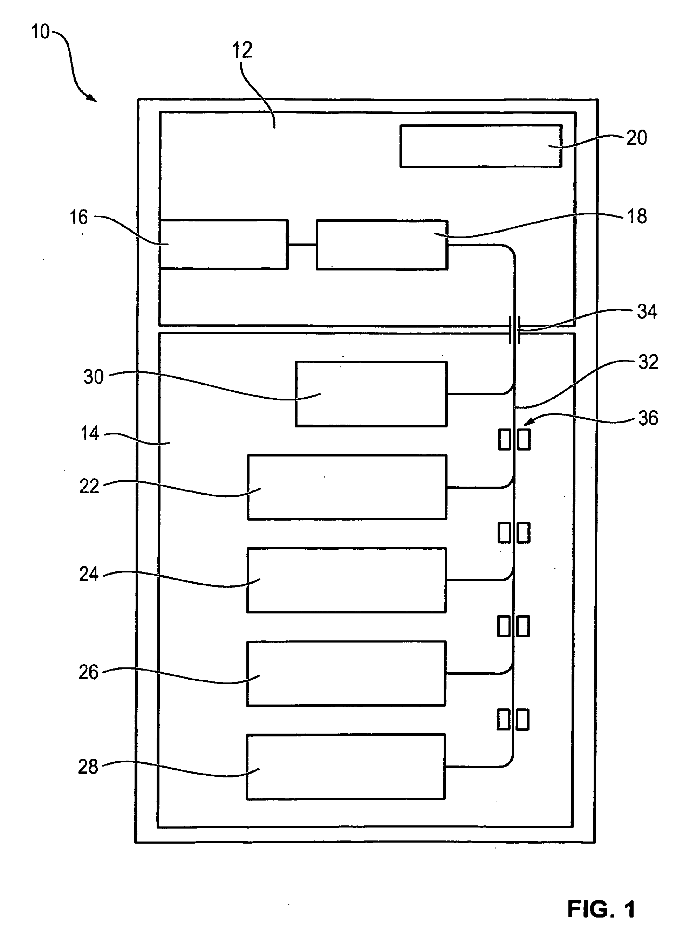

In Figur 1 ist eine schematische Darstellung einer als automatisches Kassensystem ausgebildeten Vorrichtung zur Handhabung von Wertscheinen dargestellt. Alternativ kann es sich bei der Vorrichtung 10 auch um einen Geldautomaten und/oder eine automatische Tresorkasse handeln.

Die Vorrichtung 10 umfasst ein Kopfmodul 12 sowie einen Tresor 14. Im Kopfmodul 12 ist eine Eingabe- und Ausgabeeinheit 16 angeordnet, über die Wertscheine in die Vorrichtung 10 eingegeben werden können und Wertscheine aus der Vorrichtung 10 ausgegeben werden können. Bei einer alternativen Ausführungsform können auch zwei separate Einheiten vorgesehen sein, von denen eine ausschließlich zur Eingabe von Wertscheinen und die andere ausschließlich zur Ausgabe von Wertscheinen verwendet wird.

Ferner sind in dem Kopfmodul 12 eine Sensoreinheit 18 und eine Steuereinheit 20 angeordnet. Mit Hilfe der Sensoreinheit 18 kann beispielsweise die Denomination der über die Eingabe- und Ausgabeeinheit 16 eingegebenen Wertscheine ermittelt werden. Ferner kann mit Hilfe der Sensoreinheit 18 auch die Echtheit der eingegebenen Wertscheine ermittelt werden.

In dem Tresor 14 sind vier Geldkassetten 22 bis 28 sowie eine Reject-Kassette 30 angeordnet. In den Geldkassetten 22 bis 28 werden jeweils Wertscheine, die auch wieder für eine Auszahlung bestimmt sind, aufgenommen, wohingegen in der Reject-Kassette 30 diejenigen Wertscheine aufgenommen werden, die nicht wieder für eine Auszahlung bestimmt sind. Insbesondere werden in der Reject-Kassette 30 die Wertscheine eines aufgetretenen Doppel- oder Mehrfachabzugs sowie eines aufgetretenen Wertscheinstaus aufgenommen. Somit wird sichergestellt, dass die Wertscheine eines solchen Doppelabzugs, Mehrfachabzugs bzw. Wertscheinstaus nicht an eine Bedienperson der Vorrichtung 10 ausgegeben werden und somit sichergestellt ist, dass an die Bedienperson der richtige Geldbetrag ausgezahlt wird.

Bei einer alternativen Ausführungsform der Erfindung können auch mehr oder weniger als vier Geldkassetten 22 bis 28 vorgesehen sein. Insbesondere können sieben Geldkassetten 22 bis 28 vorgesehen sein, so dass eine sortenreine Speicherung aller Denominationen des Eurowährungssatzes möglich ist. Sind weniger als sieben Geldkassetten 22 bis 28 vorgesehen, so werden vorzugsweise in einem Teil dieser Geldkassetten 22 bis 28 die Wertscheine sortenrein und in mindestens einer der Geldkassetten 22 bis 28 die Wertscheine in einer Mischspeicherung gespeichert. Unter der sortenreinen Speicherung wird verstanden, dass in einer Geldkassette 22 bis 28 jeweils nur Wertscheine genau einer Denomination aufgenommen sind, wobei bei der Mischspeicherung Wertscheine mindestens zweier verschiedener Denominationen in einer Geldkassette 22 bis 28 aufgenommen sind. Bei dem in Figur 1 gezeigten Ausführungsbeispiel sind in der ersten Geldkassette 22 Fünf-Euro Wertscheine, in der zweiten Geldkassette 24 Zehn-Euro Wertscheine und in der dritten Geldkassette 26 Zwanzig-Euro Wertscheine sortenrein gespeichert. Die Wertscheine können mithilfe einer nicht dargestellten Transporteinheit zwischen der Eingabe- und Ausgabeeinheit 16 und den Geldkassetten 22 bis 28 sowie der Reject-Kassette 30 entlang eines Transportpfads 32 transportiert werden. Hierbei ist insbesondere ein Übergabeschlitz 34 ausgebildet, durch den die Wertscheine zwischen dem Kopfmodul 12 und dem Tresor 14 übergeben werden können.

Entlang des Transportpfads 32 sind insbesondere mehrere Sensoren angeordnet, von denen einer beispielhaft mit dem Bezugszeichen 36 bezeichnet ist. Mithilfe dieser Sensoren 36 kann das Auftreten von Wertscheinstaus in dem Transportpfad 32 ermittelt werden. Die Sensoren 36 umfassen insbesondere jeweils eine Lichtschranke. Die Sensoren 36 können beispielsweise Dickensensoren sein, mit deren Hilfe die Dicke von an ihnen vorbeitransportierten Wertscheinen ermittelt werden kann, so dass Doppelanzüge, Mehrfachabzüge, Fahnen und Wertscheinstaus auf einfache Weise detektiert werden können. Solche Wertscheinstaus können sowohl bei der Auszahlung von Wertscheinen als auch bei der Einzahlung von Wertscheinen auftreten. Bei der Auszahlung von Wertscheinen kommt es insbesondere dann zu Wertscheinstaus, wenn aus einer der Geldkassetten 22 bis 28 unbeabsichtigt mindestens zwei Wertscheine gleichzeitig abgezogen werden, und somit ein Doppel- bzw. Mehrfachabzug auftritt. Das Auftreten eines Doppelabzugs, Mehrfachabzugs und/oder Wertscheinstaus bei der Auszahlung von Wertscheinen wird deshalb auch als Fehlabzug bezeichnet.

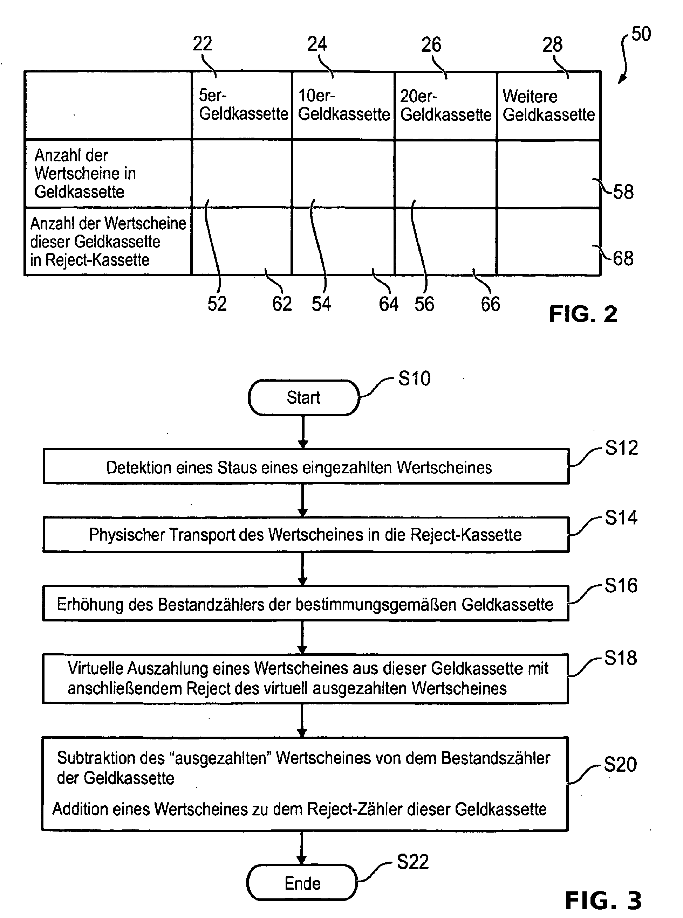

In Figur 2 ist eine schematische Darstellung der Bestandssteuerung 50 der Vorrichtung 10 nach Figur 1 dargestellt. Hierbei ist jeder Geldkassette 22 bis 28 ein Bestandszähler 52 bis 58 und ein Reject-Zähler 62 bis 68 eindeutig zugeordnet. Die Bestandszähler 52 bis 58 geben jeweils den aktuellen Bestand der jeweiligen Geldkassette 22 bis 28 an Wertscheinen an. Bei einer planmäßigen Auszahlung von Wertscheinen werden somit die Bestandszähler 52 bis 58 durch die Steuereinheit 20 jeweils um die Anzahl der bei der Auszahlung aus der entsprechenden Geldkassette 22 bis 28 entnommenen Wertscheine reduziert. Umgekehrt wird bei einer Einzahlung von Wertscheinen der Wert der entsprechenden Bestandszähler 52 bis 58 jeweils um die Anzahl der bei dieser Einzahlung der jeweiligen Geldkassette 22 bis 28 zugeführten Wertscheine erhöht.

Tritt bei der Auszahlung ein Wertscheinstau oder ein Doppel- oder Mehrfachabzug auf, der durch einen der Sensoren 36 detektiert wird, so werden die Wertscheine dieses Fehlabzugs in die Reject-Kassette 30 transportiert. Ferner wird der Wert des Reject-Zählers 62 bis 68 von den Geldkassetten 22 bis 28, aus denen die Wertscheine des Wertscheinstaus entnommen wurden, um die Anzahl der jeweils dieser Geldkassette 22 bis 28 entnommenen und der Reject-Kassette 30 zugeführten Wertscheine erhöht. Somit gibt der jeweilig Reject-Zähler 62 bis 68 die Anzahl an Wertscheinen an, die der zugeordneten Geldkassette 22 bis 28 entnommen und anstatt zur Eingabe- und Ausgabeeinheit 16 der Reject-Kassette 30 zugeführt wurden.

Durch das zuvor beschriebene Zuordnen eines Bestandszählers 52 bis 58 und eines Reject-Zählers 62 bis 68 zu jeder Geldkassette 22 bis 28 kann zu jeder Zeit der Bestand der Vorrichtung 10 auf einfache Weise durch Aufsummieren der Werte der Bestandszähler 52 bis 58 und der Reject-Zähler 62 bis 68 ermittelt werden. Insbesondere kann hierbei der jeweilige Bestandszähler 52 bis 58 und Reject-Zähler 62 bis 68 jeweils mit der Denomination der entsprechenden Geldkassette 22 bis 28 multipliziert werden, so dass der Wert der in der Vorrichtung 10 vorhandenen Wertscheine auf einfache Weise ermittelt werden kann.

Die Reject-Kassette 30 umfasst weder einer Bestandszähler noch einen Reject-Zähler.

Die in Figur 2 gewählte Tabellenform zur Darstellung der Bestandszähler 52 bis 58 und Reject-Zähler 62 bis 68 bei der Bestandssteuerung 50 ist lediglich rein exemplarisch für eine übersichtliche, kompakte Darstellung gewählt, und bedeutet nicht zwangsläufig, dass das Speichern der Werte der Bestandszähler 52 bis 58 und Reject-Zähler 62 bis 68 in der Steuereinheit 20 auch tabellarisch erfolgen muss. Die Werte der Bestandszähler 52 bis 58 und Reject-Zähler 62 bis 68 sind vorzugsweise in einem Speicherelement der Steuereinheit 20 gespeichert. Zusätzlich oder alternativ können die Werte auch in Speicherelementen der jeweiligen Geldkassette 22 bis 28 gespeichert sein.

Ferner sind in der Steuereinheit 20 Programmdaten mindestens eines Programms zur Steuerung der Vorrichtung 10 sowie der Geldkassetten 22 bis 28 und der Reject-Kassette 30 gespeichert. Vorzugsweise ist in der Steuereinheit 20 eine Einzahlungsapplikation, eine Auszahlungsapplikation und eine Reject-Applikation gespeichert, wobei die Einzahlungsapplikation bei der Einzahlung von Wertscheinen abgearbeitet wird und bei dem Abarbeiten der Einzahlungsapplikation entsprechend die Bestandszähler der jeweiligen Geldkassetten 22 bis 28 um die entsprechende Anzahl der neu aufgenommenen Wertscheine erhöht werden. Die Auszahlungsapplikation wird insbesondere bei der Auszahlung von Wertscheinen durch die Steuereinheit 20 abgearbeitet, wobei bei dem Abarbeiten der Auszahlungsapplikation die Bestandszähler 52 bis 58 der Geldkassetten 22 bis 28 wie zuvor beschrieben entsprechend um die Anzahl der jeweils entnommenen Wertscheine reduziert werden. Entsprechend wird die Reject-Applikation dann abgearbeitet, wenn bei der Auszahlung ein Fehlabzug aufgetreten ist. Beim Abarbeiten der Reject-Applikation werden somit die Reject-Zähler 62 bis 68 der Geldkassetten 22 bis 28 entsprechend um die Anzahl der der jeweiligen Geldkassette 22 bis 28 entnommenen und der Reject-Kassette 30 zugeführten Wertscheine erhöht.

Die vorgenannten Applikationen sind insbesondere als Extension for Financial Services (XFS) Applikation ausgebildet. Alternativ können die Applikationen auch als Java Extension for Financial Services (JXFS) Applikation ausgebildet sein. Bei der XFS und der JXFS handelt es sich um die beiden gängigen Programmierschnittstellen, die für Selbstbediengeräte verwendet werden. Die zuvor beschriebene Verbuchung der Wertscheine bei der Einzahlung, der Auszahlung und des Auftretens von Fehlabzügen bei der Auszahlung sind aufgrund historischer Entwicklungen bei der Programmierung über die XFS bzw. JXFS bestimmt und können aufgrund der allgemeinen Verwendung dieser beiden Standards nicht ohne weiteres geändert werden.

Während das Verbuchen der Wertscheine bei einer planmäßigen Einzahlung, einer planmäßigen Auszahlung und des Fehlabzugs bei der Auszahlung von Wertscheinen über die bekannten Applikationen auf einfache Weise möglich ist, ist die Verbuchung eines Wertscheinstaus bei der Einzahlung von Wertscheinen problematisch, da die bekannten Applikationen lediglich derart ausgebildet sind, dass mit ihrer Hilfe Fehlabzüge bei der Auszahlung von Wertscheinen verbucht werden können. Die Software ist nicht dafür ausgelegt, dass bei der Einzahlung überhaupt Wertscheinstaus auftreten können.

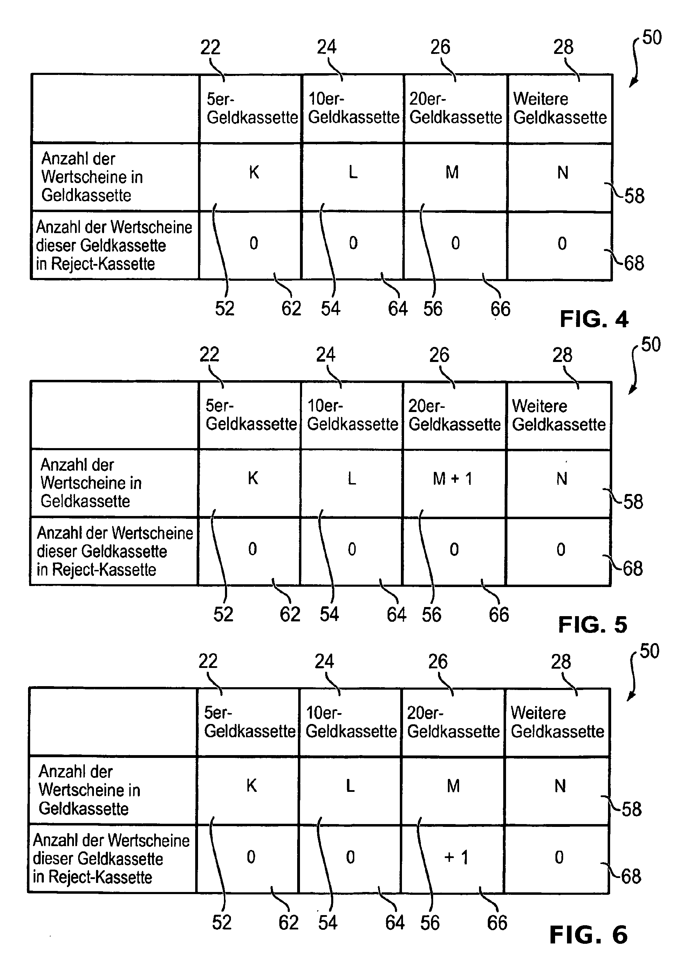

Bei bekannten Vorrichtungen 10 wurden daher die Wertscheine eines Wertscheinstaus bei der Einzahlung einer der Geldkassetten 22 bis 28 zugeführt und diese Geldkassette 22 bis 28anschließend außer Betrieb genommen, d.h. dass sie nicht weiter für die Auszahlung von Wertscheinen verwendet wurde. Somit wurde die Funktionsfähigkeit der Vorrichtung 10 deutlich eingeschränkt. Um dieses Problem zu vermeiden, werden die Wertscheine des Wertscheinstaus bei der Einzahlung von Wertscheinen gemäß dem in Figur 3 dargestellten Verfahren in der Bestandsüberwachung 50 verbucht. In den Figuren 4 bis 6 ist hierbei jeweils die Bestandsüberwachung 50 gezeigt, wobei in Figur 4 die Bestandsüberwachung 50 vor dem Auftreten des Wertscheinstaus bei der Einzahlung, in Figur 5 nach der Abarbeitung eines Teils des Verfahrens nach Figur 3 und in Figur 6 nach der Abarbeitung des gesamten Verfahrens nach Figur 3 dargestellt sind.

Wie Figur 4 zu entnehmen ist, sind vor dem Auftreten des Wertscheinstaus bei der Einzahlung in der Geldkassette 22 K Fünf-Euro Wertscheine, in der Geldkassette 24 L Zehn-Euro Wertscheine, in der Geldkassette 26 M Zwanzig-Euro Wertscheine und in der Geldkassette 28 N Wertscheine aufgenommen. Die Reject-Zähler 62 bis 68 aller vier Geldkassetten 22 bis 28 haben den Wert 0, d.h. dass zu diesem Zeitpunkt noch von keiner der Geldkassetten 22 bis 28 ein Wertschein der Reject-Kassette 30 zugeführt wurde.

Das Verfahren wird in dem Schritt S10 gestartet. Anschlie-ßend wird im Schritt S12 mit Hilfe mindestens eines Sensors 36 das Auftreten eines Wertscheinstaus innerhalb des Transportpfads 32 detektiert, wobei dieser Wertscheinstau bei dem gewählten Ausführungsbeispiel aus einem Zwanzig-Euro Wertschein besteht.

Nachdem der Wertscheinstau detektiert wurde, wird dieser den Wertscheinstau verursachende Zwanzig-Euro Wertschein physisch im Schritt S14 über die Transporteinheit in die Reject-Kassette 30 transportiert. Im anschließenden Schritt S16 wird der Bestandszähler 56 der Geldkassette 26, in der der Zwanzig-Euro Wertschein planmäßig hätte aufgenommen werden sollen, da diese Geldkassette 26 für die Speicherung von Zwanzig-Euro Wertscheinen bestimmt ist, um den Wert 1, also die Anzahl der an dem Wertscheinstau beteiligten dieser Geldkassette 26 normalerweise planmäßig zuzuführenden Wertscheine erhöht. Wie Figur 5 zu entnehmen ist, hat der Bestandszähler der Geldkassette 26 somit nun den Wert M+1. Der den Wertscheinstau bei der Einzahlung verursachende Zwanzig-Euro Wertschein wird somit derart in der Bestandsüberwachung 50 verbucht, als ob er planmäßig in die Geldkassette 26 transportiert worden wäre, also so, als ob kein Wertscheinstau bei der Einzahlung aufgetreten wäre. Hierzu wird insbesondere die Einzahlungsapplikation abgearbeitet.

Anschließend wird im Schritt S18 eine virtuelle Auszahlung getätigt, wobei bei dieser virtuellen Auszahlung diejenigen Wertscheine, die aufgrund des Wertscheinstaus bei der Einzahlung in die Reject-Kassette 30 transportiert wurden, virtuell ausgezahlt werden. Physisch verbleiben diese Wertscheine in der Reject-Kassette 30. In dem Ausführungsbeispiel besteht die virtuelle Auszahlung somit aus einem Zwanzig-Euro Wertschein. Im Schritt S20 wird somit der Wert des Bestandszählers 56 der Geldkassette 26 um den Wert 1 reduziert, da gemäß der virtuellen Auszahlung ein Wertschein dieser Geldkassette 26 entnommen wurde. Die Auszahlung wird insbesondere durch die in der Steuereinheit 20 hinterlegte Auszahlungsapplikation abgearbeitet.

Ferner wird das Auftreten eines virtuellen Wertscheinstaus bei dieser virtuellen Auszahlung simuliert, so dass im Schritt S20 der Reject-Zähler 66 der Geldkassette 26 um den Wert 1 erhöht wird. Hierbei wird insbesondere die Reject-Applikation abgearbeitet. Anschießend wird das Verfahren im Schritt S22 beendet.

In Figur 6 ist die Bestandsüberwachung 50 nach dem Abarbeiten des gesamten Verfahrens nach Figur 3 dargestellt. Wie Figur 6 zu entnehmen ist, hat der Bestandszähler 56 der Geldkassette 26 den Wert M und der Reject-Zähler 66 den Wert +1. Somit gibt die Bestandsüberwachung 50 nach Abarbeitung des Verfahrens nach Figur 3 den tatsächlichen physischen Zustand wieder, bei dem der Bestandszähler der Geldkassette 26 an Zwanzig-Euro Wertscheinen wie vor der Einzahlung, bei der der Wertscheinstau aufgetreten ist, nach wie vor den Wert M hat, wohingegen der Reject-Zähler 66 der Geldkassette 26 den Wert 1 aufweist, da der eingezahlte Zwanzig-Euro Wertschein in die Reject-Kassette 30 transportiert wurde.

Somit wird durch das zuvor beschriebene Verfahren erreicht, dass die Wertscheine des Wertscheinstaus bei der Einzahlung zwar physisch direkt, d.h. ohne zuvor einer der Geldkassetten 22 bis 28 zugeführt worden zu sein, der Reject-Kassette 30 zugeführt werden können, diese datenverarbeitungstechnisch in der Bestandsüberwachung 50 aber zunächst als eine fehlerfreie planmäßige Einzahlung und eine anschließende Auszahlung mit Auftreten eines Wertscheinstaus verbucht werden. Somit ist es auf einfache Weise möglich, auch bei dem Auftreten von Wertscheinstaus bei der Einzahlung die Wertscheine, die diesen Wertscheinstau verursachenden Wertscheine in der Reject-Kassette 30 aufzunehmen und trotzdem den tatsächlichen Bestand auf einfache Weise bei der gegebenen Applikationsstruktur zu verbuchen. Somit ist jederzeit der tatsächliche Bestand der Vorrichtung 10 an Wertscheinen fehlerfrei ermittelbar.

Ferner ist es nicht notwendig, die Marktstandards XFS bzw. JXFS abzuändern. Diese Marktstandards werden von anderen proprietären Applikationen erwartet, so dass ein Ändern dieser Marktstandards problematisch wäre.

Des Weiteren wird somit erreicht, dass die Vorrichtung 10 vollständig im Betrieb bleiben kann, d.h. dass nach wie vor alle Geldkassetten 22 bis 28 verwendet werden können.

### Bezugszeichenliste

- 10: Vorrichtung
- 12: Kopfmodul
- 14: Tresor
- 16: Eingabe- und Ausgabeeinheit
- 18: Sensoreinheit
- 20: Steuereinheit
- 22 bis 28: Geldkassette
- 30: Reject-Kassette
- 32: Transportpfad
- 34: Übergabeschlitz
- 36: Sensor
- 50: Bestandsüberwachung
- 52 bis 58: Bestandszähler
- 62 bis 68: Reject-Zähler
- S10 bis S22: Verfahrensschritt

## Patentansprüche

1. Verfahren zum Betreiben einer Vorrichtung zur Handhabung von Wertscheinen,
bei dem mit Hilfe einer Eingabe- und Ausgabeeinheit (16) Wertscheine ausgegeben und eingeben werden,
mindestens eine Geldkassette (22 bis 28) zum Aufbewahren von Wertscheinen verwendet wird,
eine Reject-Kassette (30) zur Aufnahme von einzubehaltenden Wertscheinen verwendet wird,
ein Bestandzähler (52 bis 58) verwendet wird, der den aktuellen Bestand der Geldkassette (22 bis 28) an Wertscheinen angibt,
bei der Entnahme eines Wertscheins aus der Geldkassette (22 bis 28) der Wert des Bestandszählers (52 bis 58) um den Wert eins verringert und beim Zuführen eines Wertscheins zu der Geldkassette (22 bis 28) der Wert des Bestandszählers um den Wert eins erhöht wird, beim Auftreten eines Fehlabzuges nach der Entnahme mindestens eines Wertscheins aus der Geldkassette (22 bis 28) der Wertschein bzw. die Wertscheine des Fehlabzugs in die Reject-Kassette (30) transportiert werden, und
**dadurch gekennzeichnet,**
**dass** ein der Geldkassette (22 bis 28) eindeutig zugeordneter geldkassettenspezifischer Reject-Zähler (62 bis 68) verwendet wird, der die Gesamtzahl der dieser Geldkassette (22 bis 28) entnommenen und der Reject-Kassette (30) zugeführten Wertscheine angibt,
bei dem der Wert dieses Reject-Zählers (62 bis 68) um die Anzahl der aufgrund des Fehlabzugs in die Reject-Kassette (30) transportierten Wertscheine erhöht wird,
**dass** beim Auftreten eines Wertscheinstaus während des Transports von mindestens einem eingezahlten Wertschein von der Eingabe- und Ausgabeeinheit (16) zu der Geldkassette (22 bis 28) der Wert des Bestandszählers (52 bis 58) der Geldkassette (22 bis 28) in einem ersten Schritt zunächst um die Anzahl der Wertscheine des Wertscheinstaus erhöht wird, und
**dass** anschließend in einem zweiten Schritt der Wert des Bestandzählers (52 bis 58) der Geldkassette (22 bis 28) um die Anzahl der Wertscheine des Wertscheinstaus reduziert und der Wert des Reject-Zählers (62 bis 68) der Geldkassette (22 bis 28) um die Anzahl der Wertscheine des Wertscheinstaus erhöht wird.

2. Vorrichtung zur Durchführung des Verfahrens nach einem der vorhergehenden Ansprüche zur Handhabung von Wertscheinen,
mit einer Eingabe- und Ausgabeeinheit (16) zur Eingabe und Ausgabe von Wertscheinen,
einer Steuereinheit (20),
mindestens einer Geldkassette (22 bis 28) zum Aufbewahren von Wertscheinen,
einer Reject-Kassette (30) zur Aufnahme von einzubehaltenden Wertscheinen, und
einer Transporteinheit zum Transport der Wertscheine zwischen der Eingabe- und Ausgabeeinheit (16), der Geldkassette (22 bis 28) und der Reject-Kassette (30), wobei ein den aktuellen Bestand der Geldkassette (22 bis 28) an Wertscheinen angebender Bestandszähler (52 bis 58) vorgesehen ist,
bei der Entnahme eines Wertscheines aus der Geldkassette (22 bis 28) die Steuereinheit (20) den Wert des Bestandszählers (52 bis 58) um den Wert eins verringert und beim Zuführen eines Wertscheins zu der Geldkassette (22 bis 28) den Wert des Bestandszählers (52 bis 58) um den Wert eins erhöht,
beim Auftreten eines Fehlabzuges nach der Entnahme mindestens eines Wertscheins aus der Geldkassette (22 bis 28) die Steuereinheit (20) die Transporteinheit derart ansteuert, dass diese den Wertschein bzw. die Wertscheine des Fehlabzuges in die Reject-Kassette (30) transportiert, und
**dadurch gekennzeichnet,**
**dass** ein der Geldkassette (22 bis 28) eindeutig zugeordneter geldkassettenspezifischer Reject-Zähler (62 bis 68) vorgesehen ist, der die Gesamtzahl der dieser Geldkassette (22 bis 28) entnommenen und der Reject-Kassette (30) zugeführten Wertscheine angibt, und wobei die Steuereinheit (20) den Wert dieses Reject-Zählers (62 bis 68) um die Anzahl der aufgrund des Fehlabzugs in die Reject-Kassette (30) transportierten Wertscheine erhöht,
**dass** die Steuereinheit (20) beim Auftreten eines Wertscheinstaus während des Transports von mindestens einem eingezahlten Wertschein von der Eingabe- und Ausgabeeinheit (16) in Richtung der Geldkassette (22 bis 28) den Wert des Bestandszählers (52 bis 58) der Geldkassette (22 bis 28) in einem ersten Schritt (S16) zunächst um die Anzahl der Wertscheine des Wertscheinstaus erhöht, und
**dass** die Steuereinheit (20) anschließend in einem zweiten Schritt (S20) den Wert des Bestandzählers (52 bis 58) der Geldkassette (22 bis 28) um die Anzahl der Wertscheine des Wertscheinstaus reduziert und den Wert des Reject-Zählers (62 bis 68) der Geldkassette (22 bis 28) um die Anzahl der Wertscheine des Wertscheinstaus erhöht.

3. Vorrichtung (10) nach Anspruch 2, **dadurch gekennzeichnet, dass** der aktuelle Wert des Bestandzählers (52 bis 58) und/oder der aktuelle Wert des Reject-Zählers (62 bis 68) der Geldkassette (22 bis 28) in einem Speicherelement der Geldkassette (22 bis 28) gespeichert sind.

4. Vorrichtung (10) nach Anspruch 2 oder 3, **dadurch gekennzeichnet, dass** der aktuelle Wert des Bestandzählers (52 bis 58) und/oder der aktuelle Wert des Reject-Zählers (62 bis 68) der Geldkassette (22 bis 28) in einem Speicherelement der Steuereinheit (20) gespeichert sind.

5. Vorrichtung (10) nach einem der vorhergehenden Ansprüche 2 bis 4, **dadurch gekennzeichnet, dass** die Steuereinheit (20) die Transporteinheit derart ansteuert, dass diese die Wertscheine des Wertscheinstaus direkt in die Reject-Kassette (30) transportiert.

6. Vorrichtung (10) nach einem der vorhergehenden Ansprüche 2 bis 5, **dadurch gekennzeichnet, dass** in der Vorrichtung (10) mehrere Geldkassette (22 bis 28) aufgenommen sind, und dass von jeder Geldkassette (22 bis 28) jeweils der aktuelle Wert eines Bestandzählers (52 bis 58) und der aktuelle Wert eines Reject-Zählers (62 bis 68) gespeichert sind.

7. Vorrichtung (10) nach Anspruch 6, **dadurch gekennzeichnet, dass** die Steuereinheit (20) nach der Eingabe eines Wertscheinbündels aus mehreren Wertscheinen über die Eingabe- und Ausgabeeinheit (16) festlegt, welcher der Wertscheine in welcher Geldkassette (22 bis 28) aufgenommen werden soll und somit jedem Wertschein eine Geldkassette (22 bis 28) eindeutig zuordnet, dass die Steuereinheit (20) die Transporteinheit derart ansteuert, dass diese jeden Wertschein zu der jeweils zugeordneten Geldkassette (22 bis 28) transportiert, dass die Steuereinheit (20) beim Auftreten eines Wertscheinstaus bei diesem Transport zunächst die an dem Wertscheinstau beteiligten Wertscheine dem Wert des jeweiligen Bestandzählers (52 bis 58) der dem jeweiligen Wertschein zugeordneten Geldkassette (22 bis 28) hinzuaddiert, und dass die Steuereinheit (20) anschließend den Wert der Bestandszähler (22 bis 28), die aufgrund des Wertscheinstaus erhöht wurden, wieder um den Wert, um den sie erhöht wurden, verringert und den Wert der jeweiligen Reject-Zähler (62 bis 68) der jeweiligen Geldkassetten (22 bis 28) um diesen Wert erhöht.

8. Vorrichtung (10) nach einem der vorhergehenden Ansprüche 2 bis 7, **dadurch gekennzeichnet, dass** die Vorrichtung (10) mindestens einen Sensor (18) zur Ermittlung der Denomination der eingezahlten Wertscheine und/oder zur Überprüfung der Echtheit der eingezahlten Wertscheine umfasst.

9. Vorrichtung (10) nach einem der Ansprüche 6 bis 8, **dadurch gekennzeichnet, dass** die Wertscheine in den Geldkassetten (22 bis 28) sortenrein gespeichert sind.

10. Vorrichtung (10) nach einem der vorhergehenden Ansprüchen 2 bis 9, **dadurch gekennzeichnet, dass** die Steuereinheit (20) zur Ermittlung des Bestandes der Vorrichtung (10) an Wertscheinen die Werte der Bestandszähler (52 bis 58) aller aufgenommenen Geldkassetten (22 bis 28) und die Werte der Reject-Zähler (62 bis 68) aller aufgenommenen Geldkassetten (22 bis 28) aufsummiert.

11. Vorrichtung (10) nach einem der vorhergehenden Ansprüche 2 bis 10, **dadurch gekennzeichnet, dass** in der Steuereinheit (20) Programmdaten mindestens einer Applikation, vorzugsweise mehrerer Applikationen, zum Betreiben der Vorrichtung (10) hinterlegt sind, und dass mindestens eine, vorzugsweise mehrere, der Applikationen als eine Extension for Financial Services (XFS) Applikation oder eine Java Extension for Financial Services (JXFS) Applikation ausgebildet ist.

12. Vorrichtung (10) nach Anspruch 11, **dadurch gekennzeichnet, dass** in der Steuereinheit (20) eine Einzahlungsapplikation, die die Steuereinheit (20) bei der Einzahlung von Wertscheinen abarbeitet, eine Auszahlungsapplikation, die die Steuereinheit (20) bei der Auszahlung von Wertscheinen abarbeitet, und/oder eine Reject-Applikation, die die Steuereinheit (20) beim Auftreten eines Fehlabzuges abarbeitet, hinterlegt sind.

13. Vorrichtung (10) nach Anspruch 12, **dadurch gekennzeichnet, dass** die Steuereinheit (20) beim Auftreten eines Wertscheinstaus bei der Einzahlung von Wertscheinen im ersten Schritt die Einzahlungsapplikation und im zweiten Schritt die Auszahlungsapplikation und die Reject-Applikation abarbeitet.

14. Vorrichtung (10) nach einem der vorhergehenden Ansprüche 2 bis 13, **dadurch gekennzeichnet, dass** die Steuereinheit (20) beim Auftreten des Wertscheinstaus bei der Einzahlung von Wertscheinen die Wertscheine dieses Wertscheinstaus zunächst derart verbucht, als ob kein Wertscheinstau aufgetreten wäre, dass anschließend die Steuereinheit (20) eine virtuelle Auszahlung dieser Wertscheine des Wertscheinstaus verbucht, und dass die Steuereinheit (20) bei dieser virtuelle Auszahlung die Wertscheine derart verbucht, als ob bei der virtuellen Auszahlung ein Wertscheinstau aufgetreten ist.

## Claims

1. Method for operating a device for handling notes of value
in which notes of value are dispensed and deposited with the aid of a depositing and dispensing unit (16),
at least one cashbox (22 to 28) is used for holding notes of value,
a reject box (30) is used for receiving notes of value to be retained,
a stock counter (52 to 58) that indicates the current stock of notes of value in the cashbox (22 to 28) is used,
when a note of value is removed from the cashbox (22 to 28), the value of the stock counter (52 to 58) is reduced by the value of one and, when a note of value is brought to the cashbox (22 to 28), the value of the stock counter is incremented by the value of one,
when an incorrect withdrawal occurs following the removal of at least one note of value from the cashbox (22 to 28), the note of value or notes of value of the incorrect withdrawal are transported into the reject box (30), and
**characterized**
**in that** a reject counter (62 to 68) that is clearly assigned and specific to the cashbox (22 to 28) and indicates the total number of notes of value removed from this cashbox (22 to 28) and brought to the reject box (30) is used,
in which the value of this reject counter (62 to 68) is incremented by the number of notes of value transported into the reject box (30) by reason of the incorrect withdrawal,
**in that**, when a note-of-value jam occurs during the transportation of at least one paid-in note of value from the depositing and dispensing unit (16) to the cashbox (22 to 28), the value of the stock counter (52 to 58) of the cashbox (22 to 28) is initially incremented in a first step by the number of notes of value of the note-of-value jam, and
**in that** subsequently, in a second step, the value of the stock counter (52 to 58) of the cashbox (22 to 28) is reduced by the number of notes of value of the note-of-value jam and the value of the reject counter (62 to 68) of the cashbox (22 to 28) is incremented by the number of notes of value of the note-of-value jam.

2. Device for carrying out the method according to one of the preceding claims for handling notes of value,
with a depositing and dispensing unit (16) for the depositing and dispensing of notes of value,
a control unit (20),
at least one cashbox (22 to 28) for holding notes of value,
a reject box (30) for receiving notes of value to be retained, and
a transporting unit for transporting the notes of value between the depositing and dispensing unit (16), the cashbox (22 to 28) and the reject box (30),
wherein a stock counter (52 to 58) that indicates the current stock of notes of value in the cashbox (22 to 28) is provided,
when a note of value is removed from the cashbox (22 to 28), the control unit (20) reduces the value of the stock counter (52 to 58) by the value of one and, when a note of value is brought to the cashbox (22 to 28), increments the value of the stock counter (52 to 58) by the value of one,
when an incorrect withdrawal occurs following the removal of at least one note of value from the cashbox (22 to 28), the control unit (20) activates the transporting unit in such a way that it transports the note of value or notes of value of the incorrect withdrawal into the reject box (30), and
**characterized**
**in that** a reject counter (62 to 68) that is clearly assigned and specific to the cashbox (22 to 28) and indicates the total number of notes of value removed from this cashbox (22 to 28) and brought to the reject box (30) is provided, and wherein the control unit (20) increments the value of this reject counter (62 to 68) by the number of notes of value transported into the reject box (30) by reason of the incorrect withdrawal,
with means,
**in that**, when a note-of-value jam occurs during the transportation of at least one paid-in note of value from the depositing and dispensing unit (16) in the direction of the cashbox (22 to 28), the control unit (20) initially increments the value of the stock counter (52 to 58) of the cashbox (22 to 28) in a first step (S16) by the number of notes of value of the note-of-value jam, and
with means,
**in that** subsequently, in a second step, the control unit (20) reduces the value of the stock counter (52 to 58) of the cashbox (22 to 28) by the number of notes of value of the note-of-value jam and increases the value of the reject counter (62 to 68) of the cashbox (22 to 28) by the number of notes of value of the note-of-value jam.

3. Device (10) according to Claim 2, **characterized in that** the current value of the stock counter (52 to 58) and/or the current value of the reject counter (62 to 68) of the cashbox (22 to 28) is/are stored in a memory element of the cashbox (22 to 28).

4. Device (10) according to Claim 2 or 3, **characterized in that** the current value of the stock counter (52 to 58) and/or the current value of the reject counter (62 to 68) of the cashbox (22 to 28) is/are stored in a memory element of the control unit (20).

5. Device (10) according to one of the preceding Claims 2 to 4, **characterized in that** the control unit (20) activates the transporting unit in such a way that it transports the notes of value of the note-of-value jam directly into the reject box (30).

6. Device (10) according to one of the preceding Claims 2 to 5, **characterized in that** multiple cashboxes (22 to 28) are contained in the device (10), and **in that** from each cashbox (22 to 28) the current value of a stock counter (52 to 58) and the current value of a reject counter (62 to 68) are respectively stored.

7. Device (10) according to Claim 6, **characterized in that**, following the deposit of a bundle of multiple notes of value by way of the depositing and dispensing unit (16), the control unit (20) establishes which of the notes of value is to be accepted into which cashbox (22 to 28) and thereby clearly assigns a cashbox (22 to 28) to each note of value, **in that** the control unit (20) activates the transporting unit in such a manner that the latter transports each note of value to the respectively assigned cashbox (22 to 28), **in that**, when a note-of-value jam occurs during this transportation, the control unit (20) initially adds the notes of value involved in the note-of-value jam to the value of the respective stock counter (52 to 58) of the cashbox (22 to 28) assigned to the respective note of value, and **in that** the control unit (20) subsequently reduces again the value of the stock counters (52 to 58) that were incremented by reason of the note-of-value jam by the value by which they were incremented and increases the value of the respective reject counters (62 to 68) of the respective cashboxes (22 to 28) by this value.

8. Device (10) according to one of the preceding Claims 2 to 7, **characterized in that** the device (10) comprises at least one sensor (18) for determining the denomination of the notes of value paid in and/or for checking the authenticity of the notes of value paid in.

9. Device (10) according to one of Claims 6 to 8, **characterized in that** the notes of value in the cashboxes (22 to 28) are stored separately by denomination.

10. Device (10) according to one of the preceding Claims 2 to 9, **characterized in that**, to determine the stock of notes of value in the device (10), the control unit (20) adds up the values of the stock counters (52 to 58) of all the cashboxes (22 to 28) contained, and adds up the values of the reject counters (62 to 68) of all the cashboxes (22 to 28) contained.

11. Device (10) according to one of the preceding Claims 2 to 10, **characterized in that**, to operate the device (10), program data of at least one application, preferably multiple applications, are stored in the control unit (20), and **in that** at least one, preferably more than one, of the applications is/are configured as an Extension for Financial Services (XFS) application or a Java Extension for Financial Services (JFXS) application.

12. Device (10) according to Claim 11, **characterized in that** a paying-in application, which the control unit (20) runs at the time notes of value are paid in, a paying-out application, which the control unit (20) runs at the time notes of value are paid out, and/or a reject application, which the control unit (20) runs when an incorrect withdrawal occurs, are stored in the control unit (20).

13. Device (10) according to Claim 12, **characterized in that**, when a note-of-value jam occurs at the time notes of value are paid in, the control unit (20) runs the paying-in application in the first step and the paying-out application and the reject application in the second step.

14. Device (10) according to one of the preceding Claims 2 to 13, **characterized in that**, when the note-of-value jam occurs at the time notes of value are paid in, the control unit (20) initially logs the notes of value of this note-of-value jam as though no note-of-value jam had occurred, **in that** the control unit (20) subsequently logs a virtual paying-out of these notes of value of the note-of-value jam, and **in that**, at the time of this virtual paying-out, the control unit (20) logs the notes of value as though a note-of-value jam occurred at the time of the virtual paying-out.

## Revendications

1. Procédé pour faire fonctionner un dispositif de manipulation de documents de valeur,
dans lequel, à l'aide d'une unité d'entrée et de sortie (16), des documents de valeur sont entrés et sortis,
au moins une cassette d'argent (22 à 28) est utilisée pour stocker des documents de valeur,
une cassette de rejet (30) est utilisée pour recevoir des documents de valeur à conserver,
un compteur de contenu (52 à 58) est utilisé, lequel indique le contenu actuel de la cassette d'argent (22 à 28),
lors du prélèvement d'un document de valeur de la cassette d'argent (22 à 28), la valeur du compteur de contenu (52 à 58) est réduite de la valeur un et lors de l'acheminement d'un document de valeur à la cassette d'argent (22 à 28), la valeur du compteur de contenu est augmentée de un,
à l'apparition d'une déduction erronée après le prélèvement d'au moins un document de valeur de la cassette d'argent (22 à 28), le document de valeur ou les documents de valeur de la déduction erronée sont transportés dans la cassette de rejet (30), et
**caractérisé en ce que**
l'on utilise un compteur de rejet (62 à 68) spécifique à la cassette d'argent associé univoquement à la cassette d'argent (22 à 28), lequel indique le nombre total des documents de valeur prélevés de cette cassette d'argent (22 à 28) et acheminés à la cassette de rejet (30),
la valeur de ce compteur de rejet (62 à 68) étant augmentée du nombre des documents de valeur transportés dans la cassette de rejet (30) du fait de la déduction erronée,
**en ce qu'**à l'apparition d'un bourrage de documents de valeur pendant le transport d'au moins un document de valeur versé depuis l'unité d'entrée et de sortie (16) à la cassette d'argent (22 à 28), la valeur du compteur de contenu (52 à 58) de la cassette d'argent (22 à 28) est d'abord augmentée dans une première étape du nombre des documents de valeur du bourrage de documents de valeur, et
**en ce qu'**ensuite, dans une deuxième étape, la valeur du compteur de contenu (52 à 58) de la cassette d'argent (22 à 28) est réduite du nombre des documents de valeur du bourrage de documents de valeur et la valeur du compteur de rejet (62 à 68) de la cassette d'argent (22 à 28) est augmentée du nombre des documents de valeur du bourrage de documents de valeur.

2. Dispositif pour mettre en oeuvre le procédé selon l'une quelconque des revendications précédentes, pour la manipulation de documents de valeur, comprenant une unité d'entrée et de sortie (16) pour entrer et sortir des documents de valeur,
une unité de commande (20),
au moins une cassette d'argent (22 à 28) pour stocker des documents de valeur,
une cassette de rejet (30) pour recevoir des documents de valeur à conserver, et
une unité de transport pour transporter les documents de valeur entre l'unité d'entrée et de sortie (16), la cassette d'argent (22 à 28) et la cassette de rejet (30),
un compteur de contenu (52 à 58) indiquant le nombre de documents de valeur actuellement contenus dans la cassette d'argent (22 à 28) étant prévu,
lors du prélèvement d'un document de valeur de la cassette d'argent (22 à 28), l'unité de commande (20) réduisant de la valeur un la valeur du compteur de contenu (52 à 58), et lors de l'acheminement d'un document de valeur à la cassette d'argent (22 à 28), augmentant de la valeur un la valeur du compteur de contenu (52 à 58),
à l'apparition d'une déduction erronée après le prélèvement d'au moins un document de valeur de la cassette d'argent (22 à 28), l'unité de commande (20) commandant l'unité de transport de telle sorte que celle-ci transporte le document de valeur ou les documents de valeur de la déduction erronée dans la cassette de rejet (30), et **caractérisé en ce que**
l'on prévoit un compteur de rejet (62 à 68) spécifique à la cassette d'argent associé univoquement à la cassette d'argent (22 à 28), lequel indique le nombre total des documents de valeur prélevés de cette cassette d'argent (22 à 28) et acheminés à la cassette de rejet (30), et l'unité de commande (20) augmentant la valeur de ce compteur de rejet (62 à 68) du nombre des documents de valeur transportés dans la cassette de rejet (30) du fait de la déduction erronée, avec des moyens,
**en ce que** l'unité de commande (20), à l'apparition d'un bourrage de documents de valeur pendant le transport d'au moins un document de valeur versé depuis l'unité d'entrée et de sortie (16) dans la direction de la cassette d'argent (22 à 28), augmente d'abord la valeur du compteur de contenu (52 à 58) de la cassette d'argent (22 à 28) dans une première étape (S16) du nombre des documents de valeur du bourrage de documents de valeur, et avec des moyens,
**en ce que** l'unité de commande (20) réduit ensuite, dans une deuxième étape (S20), la valeur du compteur de contenu (52 à 58) de la cassette d'argent (22 à 28) du nombre des documents de valeur du bourrage de documents de valeur et augmente la valeur du compteur de rejet (62 à 68) de la cassette d'argent (22 à 28) du nombre des documents de valeur du bourrage de documents de valeur.

3. Dispositif (10) selon la revendication 2, **caractérisé en ce que** la valeur actuelle du compteur de contenu (52 à 58) et/ou la valeur actuelle du compteur de rejet (62 à 68) de la cassette d'argent (22 à 28) sont mémorisées dans un élément de mémoire de la cassette d'argent (22 à 28).

4. Dispositif (10) selon la revendication 2 ou 3, **caractérisé en ce que** la valeur actuelle du compteur de contenu (52 à 58) et/ou la valeur actuelle du compteur de rejet (62 à 68) de la cassette d'argent (22 à 28) sont mémorisées dans un élément de mémoire de l'unité de commande (20).

5. Dispositif (10) selon l'une quelconque des revendications précédentes 2 à 4, **caractérisé en ce que** l'unité de commande (20) commande l'unité de transport de telle sorte qu'elle transporte les documents de valeur du bourrage de documents de valeur directement dans la cassette de rejet (30).

6. Dispositif (10) selon l'une quelconque des revendications précédentes 2 à 5, **caractérisé en ce que** dans le dispositif (10) sont reçues plusieurs cassettes d'argent (22 à 28), et **en ce qu'**à chaque fois la valeur actuelle d'un compteur de contenu (52 à 58) et la valeur actuelle d'un compteur de rejet (62 à 68) de chaque cassette d'argent (22 à 28) sont mémorisées.

7. Dispositif (10) selon la revendication 6, **caractérisé en ce que** l'unité de commande (20), après l'entrée d'une liasse de documents de valeur constituée de plusieurs documents de valeur par le biais de l'unité d'entrée et de sortie (16), établit quel document de valeur doit être reçu dans quelle cassette d'argent (22 à 28), et associe donc univoquement à chaque document de valeur une cassette d'argent (22 à 28), **en ce que** l'unité de commande (20) commande l'unité de transport de telle sorte que celle-ci transporte chaque document de valeur à la cassette d'argent respectivement associée (22 à 28), **en ce que** l'unité de commande (20), à l'apparition d'un bourrage de documents de valeur lors de ce transport, ajoute d'abord les documents de valeur impliqués dans le bourrage de documents de valeur à la valeur du compteur de contenu respectif (52 à 58) de la cassette d'argent (22 à 28) associée au document de valeur respectif, et **en ce que** l'unité de commande (20) réduit ensuite la valeur des compteurs de contenu (52 à 58) qui ont été augmentés du fait du bourrage de documents de valeur à nouveau de la valeur de laquelle ils ont été augmentés, et augmente de cette valeur la valeur des compteurs de rejet respectifs (62 à 68) des cassettes d'argent respectives (22 à 28).

8. Dispositif (10) selon l'une quelconque des revendications précédentes 2 à 7, **caractérisé en ce que** le dispositif (10) comprend au moins un capteur (18) pour déterminer la dénomination des documents de valeur versés et/ou pour vérifier l'authenticité des documents de valeur versés.

9. Dispositif (10) selon l'une quelconque des revendications 6 à 8, **caractérisé en ce que** les documents de valeur sont mémorisés par types dans les cassettes d'argent (22 à 28).

10. Dispositif (10) selon l'une quelconque des revendications précédentes 2 à 9, **caractérisé en ce que** l'unité de commande (20), pour déterminer le contenu du dispositif (10) en documents de valeur, additionne les valeurs des compteurs de contenu (52 à 58) de toutes les cassettes d'argent reçues (22 à 28) et les valeurs des compteurs de rejet (62 à 68) de toutes les cassettes d'argent reçues (22 à 28).

11. Dispositif (10) selon l'une quelconque des revendications précédentes 2 à 10, **caractérisé en ce que** dans l'unité de commande (20) sont consignées des données de programme d'au moins une application, de préférence de plusieurs applications, pour faire fonctionner le dispositif (10), et **en ce qu'**au moins une, de préférence plusieurs, des applications est réalisée sous forme d'extension pour Application de Services Financiers (XFS) ou d'extension Java pour Application de Services Financiers (JXFS).

12. Dispositif (10) selon la revendication 11, **caractérisé en ce que** dans l'unité de commande (20) sont consignées une application de versement, qui est exécutée par l'unité de commande (20) lors du versement de documents de valeur, une application de tirage qui est exécutée par l'unité de commande (20) lors du tirage de documents de valeur et/ou une application de rejet qui est exécutée par l'unité de commande (20) lors de l'apparition d'une déduction erronée.

13. Dispositif (10) selon la revendication 12, **caractérisé en ce que** l'unité de commande (20), à l'apparition d'un bourrage de documents de valeur, lors du versement de documents de valeur dans la première étape, exécute l'application de versement et dans la deuxième étape, exécute l'application de tirage et l'application de rejet.

14. Dispositif (10) selon l'une quelconque des revendications précédentes 2 à 13, **caractérisé en ce que** l'unité de commande (20), à l'apparition du bourrage de documents de valeur lors du versement de documents de valeur, comptabilise d'abord les documents de valeur de ce bourrage de documents de valeur, comme si aucun bourrage de documents de valeur n'avait eu lieu, **en ce qu'**ensuite l'unité de commande (20) comptabilise un tirage virtuel de ces documents de valeur du bourrage de documents de valeur, et **en ce que** l'unité de commande (20), lors de ce tirage virtuel, comptabilise les documents de valeur comme si un bourrage de documents de valeur avait eu lieu lors du tirage virtuel.
